(19) Europäisches Patentamt
European Patent Office
Office européen des brevets

(11) Veröffentlichungsnummer: **0 177 062**
**A2**

(12) # EUROPÄISCHE PATENTANMELDUNG

(21) Anmeldenummer: **85112626.8**

(22) Anmeldetag: **04.10.85**

(51) Int. Cl.[4]: **C 04 B 35/48**
H 01 M 4/90, C 25 B 11/04

(30) Priorität: **05.10.84 DE 3436597**

(43) Veröffentlichungstag der Anmeldung:
**09.04.86 Patentblatt 86/15**

(84) Benannte Vertragsstaaten:
**AT BE CH DE FR GB IT LI LU NL SE**

(71) Anmelder: **Max-Planck-Gesellschaft zur Förderung der Wissenschaften e.V.**
**Bunsenstrasse 10**
**D-3400 Göttingen(DE)**

(72) Erfinder: **Worrell, Wayne, Prof. Dr.**
**328 State Road**
**Norbeth Pennsylvania 18072(US)**

(72) Erfinder: **Weppner, Werner, Dr.**
**Weinbergweg 20a**
**D-7000 Stuttgart 80(DE)**

(72) Erfinder: **Schubert, Helmut**
**Gartenstrasse 28**
**D-7250 Leonberg(DE)**

(74) Vertreter: **Weickmann, Heinrich, Dipl.-Ing. et al,**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Möhlstrasse 22**
**D-8000 München 80(DE)**

(54) **Oxidischer Körper mit ionischer und elektronischer Leitfähigkeit.**

(57) Es werden gemischt leitende oxidische Körper mit ionischer und elektronischer Leitfähigkeit beschrieben, die dadurch gekennzeichnet sind, daß sie aus 98 bis 25 Mol-% kubischem oder tetragonalem $ZrO_2$, 1,5 bis 25 Mol-% eines die $ZrO_2$-Phase stabilisierenden Oxids und 0,5 bis 50 Mol-% wenigstens eines Oxids eines Metalls der Gruppen Va und VIa des periodischen Systems der Elemente oder/und Titandioxid bestehen. Diese Körper eignen sich hervorragend als Elektrodenmaterial für Sauerstoffaustauschreaktionen.

./...

EP 0 177 062 A2

FIG.1

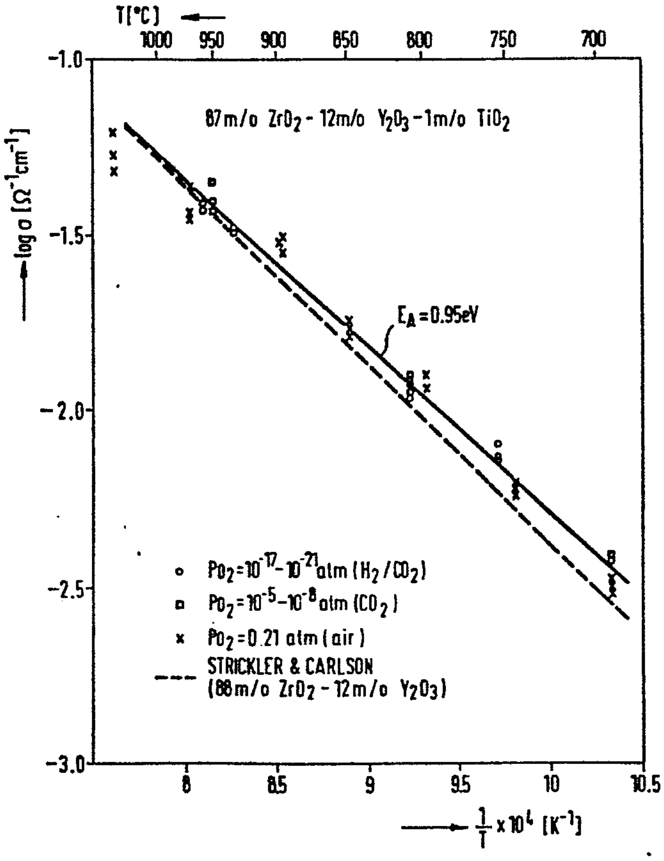

T[°C]
1000
950
900
850
800
750
700
-1.0
-1.5
-2.0
-2.5
-3.0
log σ [Ω⁻¹cm⁻¹]
87m/o ZrO2 - 12m/o Y2O3 - 1m/o TiO2
EA = 0.95eV
PO2 = 10⁻¹⁷ - 10⁻²¹ atm (H2/CO2)
PO2 = 10⁻⁵ - 10⁻⁸ atm (CO2)
PO2 = 0.21 atm (air)
STRICKLER & CARLSON
(88m/o ZrO2 - 12m/o Y2O3)
8
8.5
9
9.5
10
10.5
1/T x 10⁴ [K⁻¹]

Die Erfindung betrifft oxidische Körper mit ionischer und elektronischer Leitfähigkeit und ihre Verwendung, insbesondere als Elektrodenmaterial für Sauerstoffaustauschreaktionen.

Sauerstoffelektroden bestehen normalerweise aus Platin oder anderen metallisch leitenden Materialien wie z. B. Mischoxiden mit Perowskit-Struktur, die in Luft oder anderen oxidierenden Atmosphären beständig sind. Bei Elektroden aus solchen metallisch leitenden Materialien erfolgt der Ladungsübergang an den eindimensionalen Grenzlinien des Dreiphasenkontaktes Gas-Elektrode-Elektrolyt, bei einer Brennstoffzelle also z.B. an einem dreifachen Kontakt Platin/Brennstoffgas/Wasserstoffgas. Bei einem solchen Kontakt sind aber poröse Materialien, z.B. poröses Platin, sowie das Arbeiten bei hohen Temperaturen erforderlich.

Es ist auch bekannt, als Elektroden feste Sauerstoffionenleiter auf der Basis von $ZrO_2$ einzusetzen. Ein entscheidender Nachteil der Anwendung solcher fester Sauerstoffionenleiter liegt aber in der Notwendigkeit einer relativ hohen Arbeitstemperatur von mehr als 600°C. Die Ursache hierfür ist die geschwindigkeitsbestimmende Kinetik des Ein- und Ausbaus von Sauerstoff an den Elektroden. Die Schritte vom Sauerstoffmolekül über das Atom zum Ion und dessen Einbau in das Kristallgitter sind gehemmt. Die Ionenleitfähigkeit des Zirkonoxidkristalls würde theoretisch zwar eine Anwendung bei deutlich niedrigeren Temperaturen zulassen, falls die Kinetik des Austauschs des Sauerstoffs schnell genug wäre. Wegen der geringen Austauschstromdichte läßt sich mit Zirkondioxid-Festelektrolyten und den bisher verwendeten Elektroden aber keine richtige Anzeige der elektromotorischen Kraft erhalten, wenn die Sauerstoffpartialdrucke zu beiden Seiten fixiert werden. Entsprechend aufgebaute Brennstoffzellen zeigen nicht die gewünschte hohe Spannung und liefern einen zu geringen Strom bei niedrigeren Temperaturen als 600°C.

Aufgabe der vorliegenden Erfindung ist deshalb die Bereitstellung von als Elektrodenmaterial geeigneten Körpern, mit denen die aufgezeigten Nachteile überwunden werden können. Diese Aufgabe wird mit der vorliegenden Erfindung gelöst.

Gegenstand der Erfindung ist ein oxidischer Körper mit ionischer und elektronischer Leitfähigkeit, der dadurch gekennzeichnet ist, daß er aus 98 bis 25 Mol-% kubischem oder tetragonalem $ZrO_2$, 1,5 bis 25 Mol-% eines die $ZrO_2$-Phase stabilisierenden Oxids und 0,5 bis 50 Mol-% wenigstens eines Oxids eines Metalls der Gruppen Va und VIa des periodischen Systems der Elemente oder/und Titandioxid sowie üblichen Verunreinigungen besteht.

Ein die $ZrO_2$-Phase stabilisierendes Oxid (Stabilisator) ist vorzugsweise ein Oxid aus der Gruppe der Erdalkalimetalle, von Yttrium, und/oder der Seltenen Erdmetalle, und ist insbesondere ein Oxid der Seltenen Erdmetalle, Yttriumoxid ($Y_2O_3$), Magnesiumoxid und/oder Calciumoxid, wobei insbesondere Yttriumoxid, Magnesiumoxid und Calciumoxid eingesetzt werden. Vorzugsweise enthält der erfindungsgemäße gemischt leitende Körper die Stabilisatoren in einer Menge von 5 bis 15 Mol-%.

Von den in einer Menge von 0,5 bis 50 Mol-% vorhandenen Oxiden eines Metalls der Gruppen Va und VIa und/oder von Titandioxid wird Titandioxid bevorzugt eingesetzt; die erfindungsgemäßen oxidischen Körper enthalten diese Oxide vorzugsweise in einer Menge von 1 bis 35, insbesondere von 1 bis 20 Mol-%. In einer besonders bevorzugten Ausführungsform enthält das erdindungsgemäße oxidische Material 77 bis 88 Mol-% $ZrO_2$, 11 bis 13 Mol-% $Y_2O_3$ und 1 bis 10 Mol-% $TiO_2$.

Im gemischt leitenden oxidischen Körper mit ionischer und elektronischer Leitfähigkeit liegt das $ZrO_2$ in der kubischen oder tetragonalen Phase vor. Es kann Verunreinigungen an Hafniumdioxid ($HfO_2$) enthalten und besitzt z.B. eine Reinheit

0177062

von 95 bis 99,5 %, insbesondere von 98 bis 99 %. Für die Ionenleitung ist die Dotierung verantwortlich, die durch den Zusatz der die $ZrO_2$-Phase stabilisierenden Oxide erfolgt; durch diese Oxide wird also neben der die $ZrO_2$-Phase stabilisierenden Wirkung auch die zur Ionenleitfähigkeit erforderliche Dotierung erreicht. Zur elektronischen Leitfähigkeit tragen die Oxide aus der Gruppe Va und VIa und/oder insbesondere das $TiO_2$ bei.

Werden die erfindungsgemäßen oxidischen Körper als Zirkondioxid-Festelektroden verwendet, so werden auch im Temperaturbereich unterhalb von 600°C gute Ergebnisse erzielt. Es wurde gefunden, daß bei Verwendung der erfindungsgemäßen Körper als Elektroden die EMK richtig angezeigt wird, nachdem die Sauerstoffpartialdrucke durch Gase oder Metalloxidgemische zu beiden Seiten fixiert wurden. Außerdem lassen sich größere Stromdichten erreichen. Die aus erfindungsgemäßen Körpern hergestellten Elektroden ermöglichen also einen wesentlich ungehemmteren Ein- und Ausbau von Sauerstoff in bzw. aus dem Kristallgitter. Der Einbau des Sauerstoffs ist durch die erhöhte elektronische Leitung des erfindungsgemäßen oxidischen Materials katalytisch aktiviert. Die Kinetik ist sogar im Vergleich zu dem bisher gebräuchlichen teuren und oft als Katalysator verstandenen Platin günstiger. Sauerstoffsonden, Brennstoffzellen, Elektrolysezellen, z.B. Wasserelektrolysezellen, oder Sauerstoffsensoren können daher auch bei niedrigeren Temperaturen als bisher erforderlich betrieben werden. Neben einer einfacheren Handhabbarkeit werden dadurch auch thermodynamische Vorteile erzielt: So läßt sich z. B. Kohlenstoff nur unterhalb von etwa 600°C vollständig zu $CO_2$ verbrennen, weil bei höheren Temperaturen das Gleichgewicht wesentlich stärker auf der Seite des CO liegt; damit ist der Stoffumsatz aber deutlich geringer; unter Einsatz von erfindungsgemäßen oxidischen Körpern, mit denen auch unterhalb von 600°C gearbeitet werden kann, lassen sich diese Nachteile vermeiden. Aber auch beim Arbeiten unter höheren Temperaturen, also z. B. beim Arbeiten oberhalb von 600°C, werden mit den erfindungsgemäßen oxidischen Körpern, z. B. bei ihrer Verwendung als Elektrodenmaterial für Sauerstoffaustauschreaktionen, insbesondere als Sauerstoffkonzentrationszellen, Sauerstoffsonden, z. B. für die Stahlherstellung oder für Verbrennungsmotoren in Kraftfahrzeugen, Brennstoffzellen und Elektrolysezellen, Vorteile erzielt, weil die Verwendung von teuren porösen Platinelektroden dabei nicht mehr erforderlich ist. Da bei den erfindungsgemäßen oxidischen Körpern der Einbau des Sauerstoffs und der Elektronenaustausch auf einer zweidimensionalen Fläche erfolgen kann, läßt dies gegenüber den Elektroden des Standes der Technik, bei denen der Ladungsübergang an eindimensionalen Grenzlinien des Dreiphasenkontaktes erfolgt, weitere Gestaltungsmöglichkeiten im Aufbau und Betrieb von Elektrolysezellen usw. zu.

Gegenstand der vorliegenden Erfindung ist deshalb auch die Verwendung der erfindungsgemäßen oxidischen Körper als Elektrodenmaterial für Sauerstoffaustauschreaktionen, insbesondere in Sauerstoffkonzentrationszellen, Sauerstoffsonden, Brennstoffzellen und Elektrolysezellen.

Die Herstellung der erfindungsgemäßen oxidischen Körper mit ionischer und elektronischer Leitfähigkeit kann je nach dem beabsichtigten Verwendungszweck auf an sich bekannte Weise aus den oxidischen Pulvermaterialien erfolgen. Die Herstellung von Sinterformkörpern (Sinterkeramiken) kann z. B. durch Vermischen und Vermahlen der oxidischen Bestandteile, nachfolgendes Verpressen und Sintern der erhaltenen Grünkörper in Luft erfolgen. Die Verpressung erfolgt dabei vorzugsweise isostatisch, wobei insbesondere bei Drucken zwischen 600 und 700 MPa gearbeitet wird.

Obwohl die Herstellung von Sinterkeramiken für besondere Anwendungen, z. B. für Hochtemperatur-Brennstoffzellen, bei denen eine gasdichte Elektrode erforderlich ist, bevorzugt ist, sind die erfindungsgemäßen Körper nicht darauf beschränkt. Es ist auch jede andere Herstellungsart möglich, z. B. durch Vermischen der pulverförmigen Bestandteile in Gegenwart eines geeigneten Bindemittels, wie z. B. eines solchen auf Silikatbasis, wie Wasserglas, oder von die Elektrodeneigenschaften nicht beeinflussenden Kunststoffen, z. B. auf Epoxidbasis. Auf diese Weise hergestellte Formlinge können, wenn erforderlich, durch nachfolgendes Überziehen mit einem gasdichten Überzug oder durch eine Oberflächensinterung gasdicht gemacht werden. Weitere Möglichkeiten sind beispielsweise auch eine Herstellung der Formkörper durch Einkristallzüchtung, durch Komprimieren unter hohem Druck ohne Anwendung hoher Temperaturen, durch Verkleben (wobei aber die Leitfähigkeit erhalten bleiben muß), oder durch Fällung, oder geeignete Verfahren zur Herstellung fester Lösungen der oxidischen Bestandteile in $ZrO_2$. In bestimmten Fällen kann auch eine schaumartige Konsistenz, z. B. durch Verschäumen mit einem Kunststoff, der gleichzeitig als Bindemittel dient, zweckmäßig sein. Die Korngrößen der pulverförmigen Bestandteile liegen in der Regel unterhalb 120 µm, insbesondere unter 80 µm, und liegen bevorzugt zwischen 1 und 60 µm.

Die nachfolgenden Beispiele erläutern die Erfindung näher, ohne sie darauf zu beschränken.

## B e i s p i e l e

### Beispiel 1

Als Ausgangsmaterial zur Herstellung eines erfindungsgemäßen oxidischen Körpers dienten $ZrO_2$-Pulver mit einer Teilchengröße zwischen 1 und 40 µm (99 % $ZrO_2$ + $HfO_2$; Typ SC 20 von Magnesium Electron-MEL-England); $Y_2O_3$ (99,99 %; von Ventron, Karlsruhe) und $TiO_2$ (LAB-Qualität, Nr. 808, von Merck, Darmstadt).

Die Oxide (a) 88 MOl-% $ZrO_2$, 11 Mol-% $Y_2O_3$, 1 Mol-% $TiO_2$; b) 79 Mol-% $ZrO_2$, 11 Mol-% $Y_2O_3$, 10 Mol-% $TiO_2$) wurden in einem Attritor bis zu 6 Stunden in n-Hexan oder Alkohol vermahlen. Die Schlämme wurden bei 70°C an der Luft getrocknet und durch ein Sieb (Maschenweite 200 µm) gesiebt. Die Pulver wurden isostatisch 1 Minute lang bei einem Druck von 640 MPa verpreßt. Die Gründichte betrug 60 % der theoretischen Dichte. Die Proben wurden in Luft bei 1550°C zwei Stunden lang gesintert. Die Proben hatten einen Durchmesser von 12 bis 13,3 mm und eine Dicke von 2,5 bis 3,5 mm.

Zur Durchführung elektrischer Messungen (Widerstands- und Leitfähigkeitsmessungen) wurde Platinpaste (von der Fa. Demetron, Hanau) auf die Oberfläche der Proben aufgebracht, und dann auf 500°C zwei Stunden lang erhitzt, um das organische Lösungsmittel zu entfernen. Die Temperatur wurde dann auf 800°C erhöht und sechs Stunden lang bei dieser Temperatur erhitzt.

Der Wechselstromwiderstand wurde mit der Komplex-Impedanz-Technik (complex impedance-technique) gemessen, die elektronische Leitfähigkeit unter Verwendung einer Polarisationszelle nach Wagner (vgl. W. Weppner, J. Elektroanal. Chem. 84 (1977) 339).

Beispiel 2

Wie im Beispiel 1 angegeben wurden die folgenden Oxide im angegebenen Mengenverhältnis 6 Stunden lang in einem Attritor in Gegenwart von n-Hexan vermahlen und wie im Beispiel 1 angegeben zu Formkörpern einer Größe zwischen 12 und 13,3 mm Durchmesser und 2,5 bis 3,5 mm Dicke verarbeitet (die Mengenangaben beziehen sich auf Mol-%).

a) 30 $ZrO_2$, 20 $Y_2O_3$, 50 $TiO_2$
b) 88 $ZrO_2$, 11 MgO, 1 $TiO_2$
c) 88 $ZrO_2$, 8 $Y_2O_3$, 3 CaO, 1 $TiO_2$

d) 88 $ZrO_2$, 8 $Y_2O_3$, 3 CaO, 1 $VO_2$.

Mit den nach a) bis d) erhaltenen Formkörpern wurden wie im Beispiel 1 beschrieben Leitfähigkeits- und Widerstandsmessungen durchgeführt.

Die Figuren 1 bis 9 zeigen die mit den Formkörpern des Beispiels 1 erhaltenen Ergebnisse der Widerstands- und Leitfähigkeitsmessungen.

Die Fig. 1 und 2 zeigen die Ergebnisse der Leitfähigkeitsmessungen der Proben a) und b) von Beispiel 1 (1 bzw. 10 Mol-% $TiO_2$). Die Ergebnisse sind innerhalb der experimentellen Meßgenauigkeit im Bereich von 0,21 bis $10^{-21}$ atm vom Sauerstoff(druck) unabhängig.

Die Fig. 3 bis 6 zeigen die Stromstärke-Spannungs-Kurven der Proben nach Beispiel 1 a) und 1 b) (1 Mol-% bzw. 10 Mol-% $TiO_2$) bei 697, 790 und 900°C.

Die Fig. 7 und 8 zeigen die partiellen Elektronenleitfähigkeiten als Funktion des Sauerstoffpartialdrucks, sowie die gesamte (Ionen)-Leitfähigkeit bei Temperaturen von 697, 790 und 900°C. Zum Vergleich sind die Elektronenleitfähigkeiten für einen Körper aus 88 Mol-% $ZrO_2$ und 12 Mol-% $Y_2O_3$ angegeben.

Die Fig. 9 zeigt die Temperaturabhängigkeit der Leitfähigkeiten der Proben von Beispiel 1 a) und 1 b) (1 Mol-% $TiO_2$ bzw. 10 Mol-% $TiO_2$), die aus den geradlinigen Kurventeilen der Fig. 3 bis 6 abgeleitet wurde.

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA, Dr. J. Prechtel

HSMCT

8000 MÜNCHEN 86
POSTFACH 860 820
MÜHLSTRASSE 22
TELEFON (089) 98 03 52
TELEX 5 22 621
TELEGRAMM PATENTWEICKMANN MÜNCHEN

Max-Planck-Gesellschaft zur Förderung der Wissenschaften e.V.,
Bunsenstraße 10, D-3400 Göttingen

---

Oxidischer Körper mit ionischer und elektronischer Leitfähigkeit

---

## Patentansprüche

1. Gemischt leitender Körper, dadurch gekennzeichnet, daß er aus 98 bis 25 Mol-% kubischem oder tetragonalem $ZrO_2$, 1,5 bis 25 Mol-% eines die $ZrO_2$-Phase stabilisierenden Oxids und 0,5 bis 50 Mol-% wenigstens eines Oxids eines Metalls der Gruppen 5a und 6a des periodischen Systems der Elemente oder/und Titandioxid sowie üblichen Verunreinigungen besteht.

2. Körper nach Anspruch 1, dadurch gekennzeichnet, daß das die $ZrO_2$-Phase stabilisierende Oxid aus einem Seltenerdoxid, Yttriumoxid, Magnesiumoxid oder/und Calciumoxid besteht.

3. Körper nach einem der vorhergehenden Ansprüche, dadurch gekennzeichnet, daß er 5 bis 15 Mol-% Stabilisator enthält.

4. Körper nach einem der vorhergehenden Ansprüche, dadurch gekennzeichnet, daß er 77 bis 88 Mol-% $ZrO_2$, 11 bis 13 Mol-% $Y_2O_3$ und 1 bis 10 Mol-% $TiO_2$ enthält.

5. Verwendung eines oxidischen Körpers gemäß Anspruch 1 bis 4 als Elektrodenmaterial für Sauerstoffaustauschreaktionen, insbesondere für Sauerstoffkonzentrationszellen, Sauerstoffsonden, Brennstoffzellen und Elektrolysezellen.

FIG.1

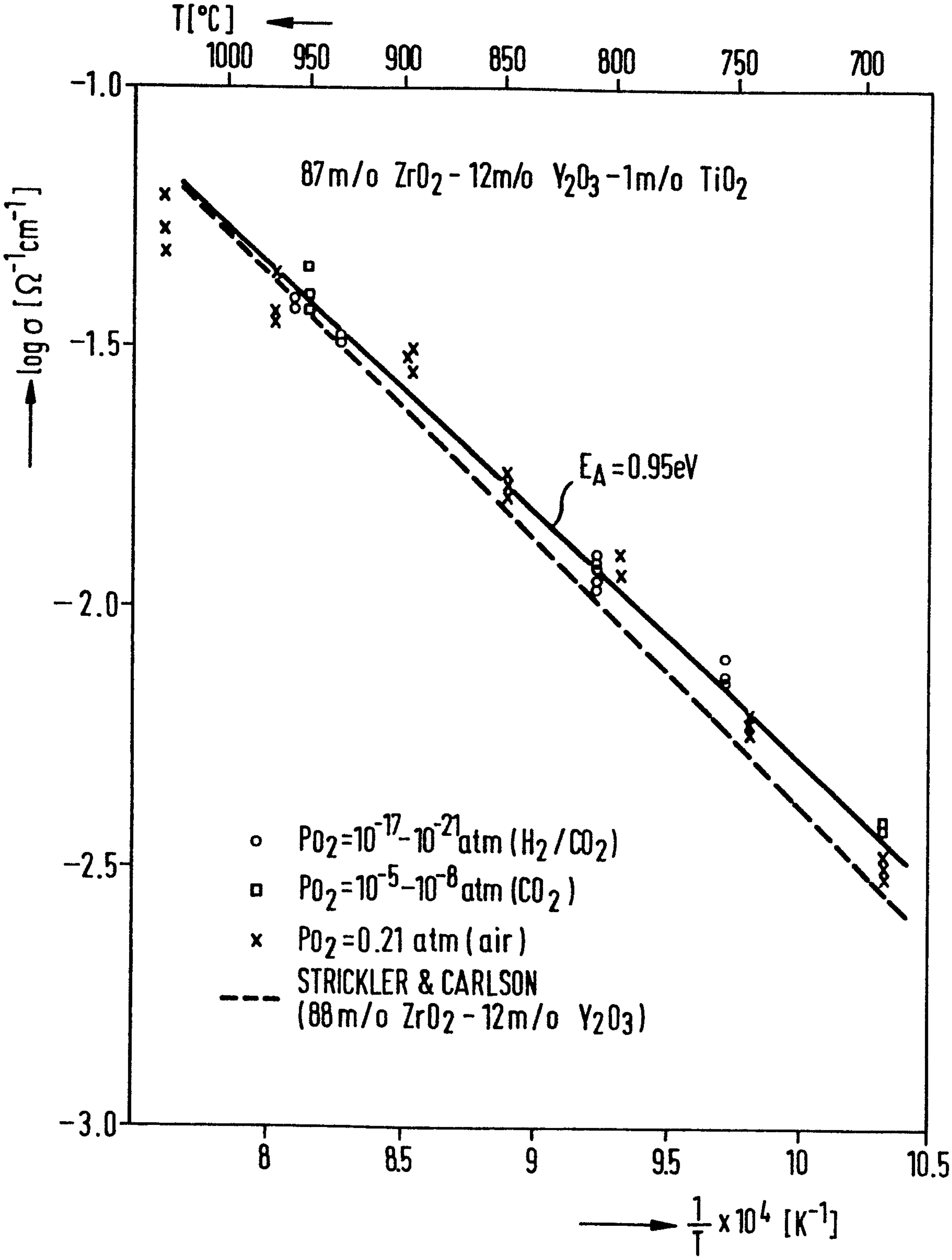

T[°C] ←
1000
950
900
850
800
750
700
−1.0
−1.5
−2.0
−2.5
−3.0
→ log σ [Ω⁻¹cm⁻¹]
87m/o ZrO2 - 12m/o Y2O3 - 1m/o TiO2
EA = 0.95eV
○ PO2 = 10⁻¹⁷ - 10⁻²¹ atm (H2/CO2)
□ PO2 = 10⁻⁵ - 10⁻⁸ atm (CO2)
× PO2 = 0.21 atm (air)
STRICKLER & CARLSON
(88m/o ZrO2 - 12m/o Y2O3)
8
8.5
9
9.5
10
10.5
→ 1/T x 10⁴ [K⁻¹]

FIG. 2

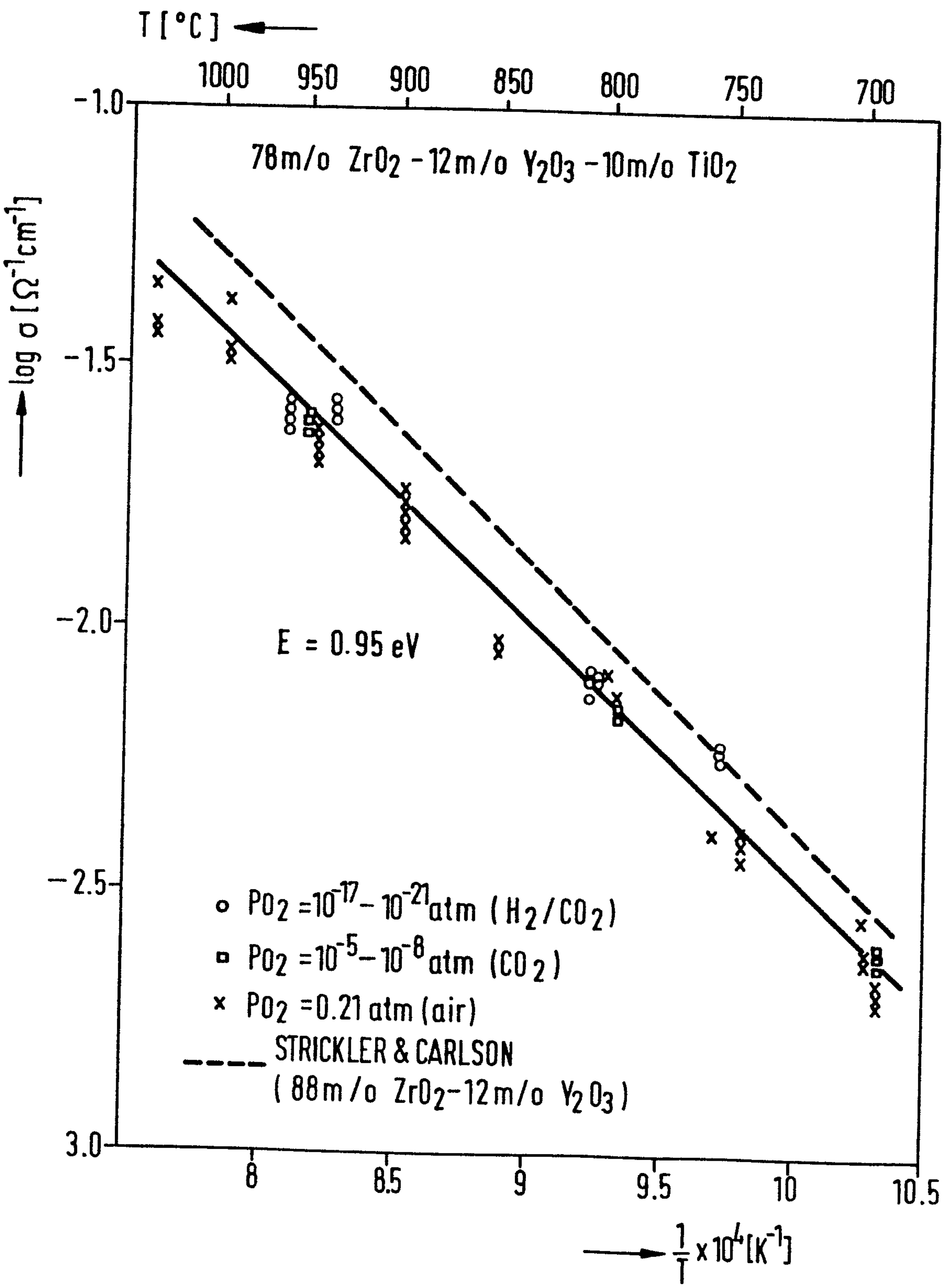

T [°C]
1000
950
900
850
800
750
700
-1.0
-1.5
-2.0
-2.5
3.0
log σ [Ω⁻¹cm⁻¹]
78m/o ZrO2 - 12m/o Y2O3 - 10m/o TiO2
E = 0.95 eV
PO2 = 10⁻¹⁷ - 10⁻²¹ atm (H2/CO2)
PO2 = 10⁻⁵ - 10⁻⁸ atm (CO2)
PO2 = 0.21 atm (air)
STRICKLER & CARLSON
(88m/o ZrO2 - 12m/o Y2O3)
8
8.5
9
9.5
10
10.5
1/T x 10⁴ [K⁻¹]

FIG. 3

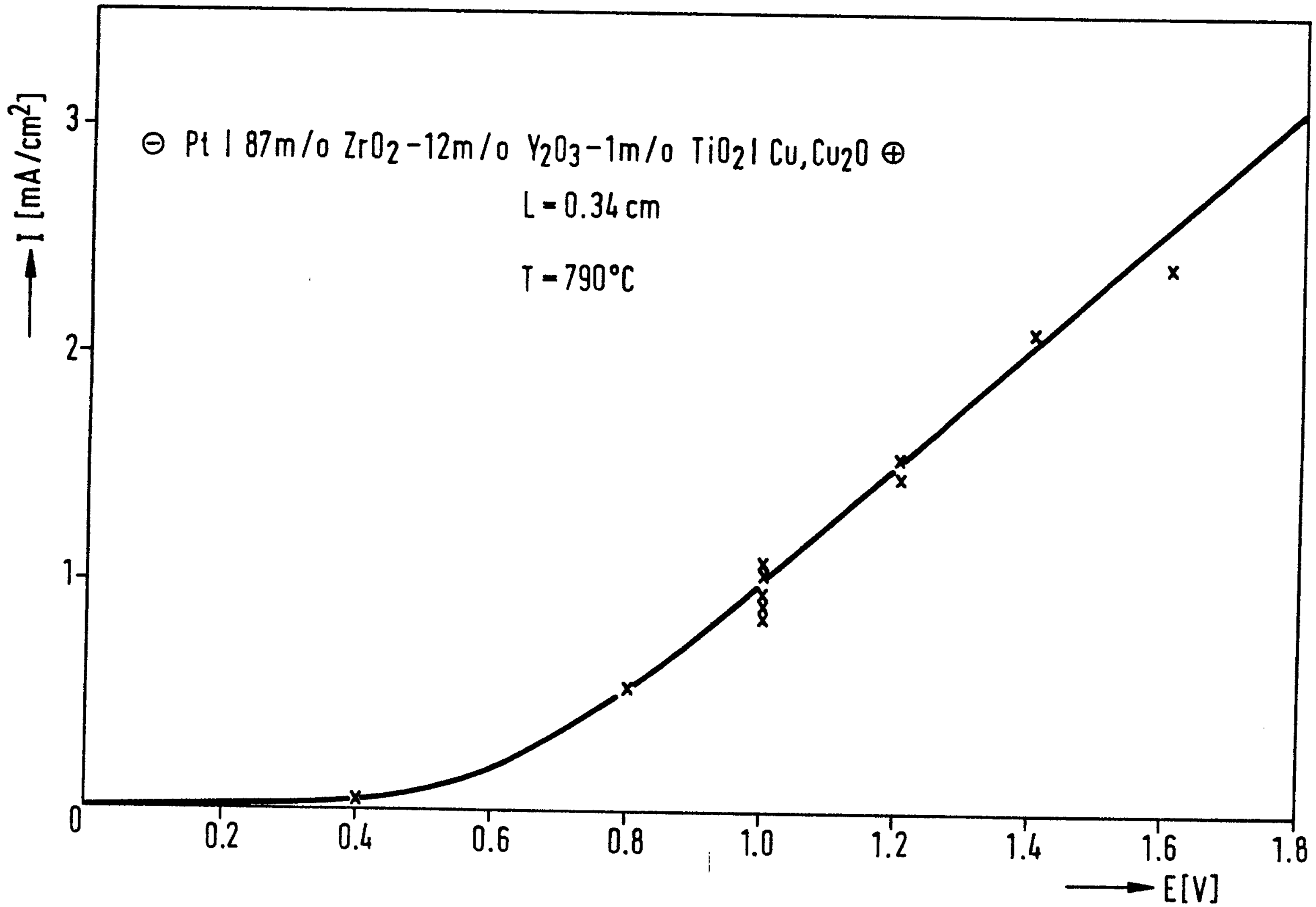

⊖ Pt | 87m/o ZrO2-12m/o Y2O3-1m/o TiO2 | Cu,Cu2O ⊕
L = 0.34 cm
T = 790°C
I [mA/cm2]
0
1
2
3
0.2
0.4
0.6
0.8
1.0
1.2
1.4
1.6
1.8
E [V]

FIG. 4

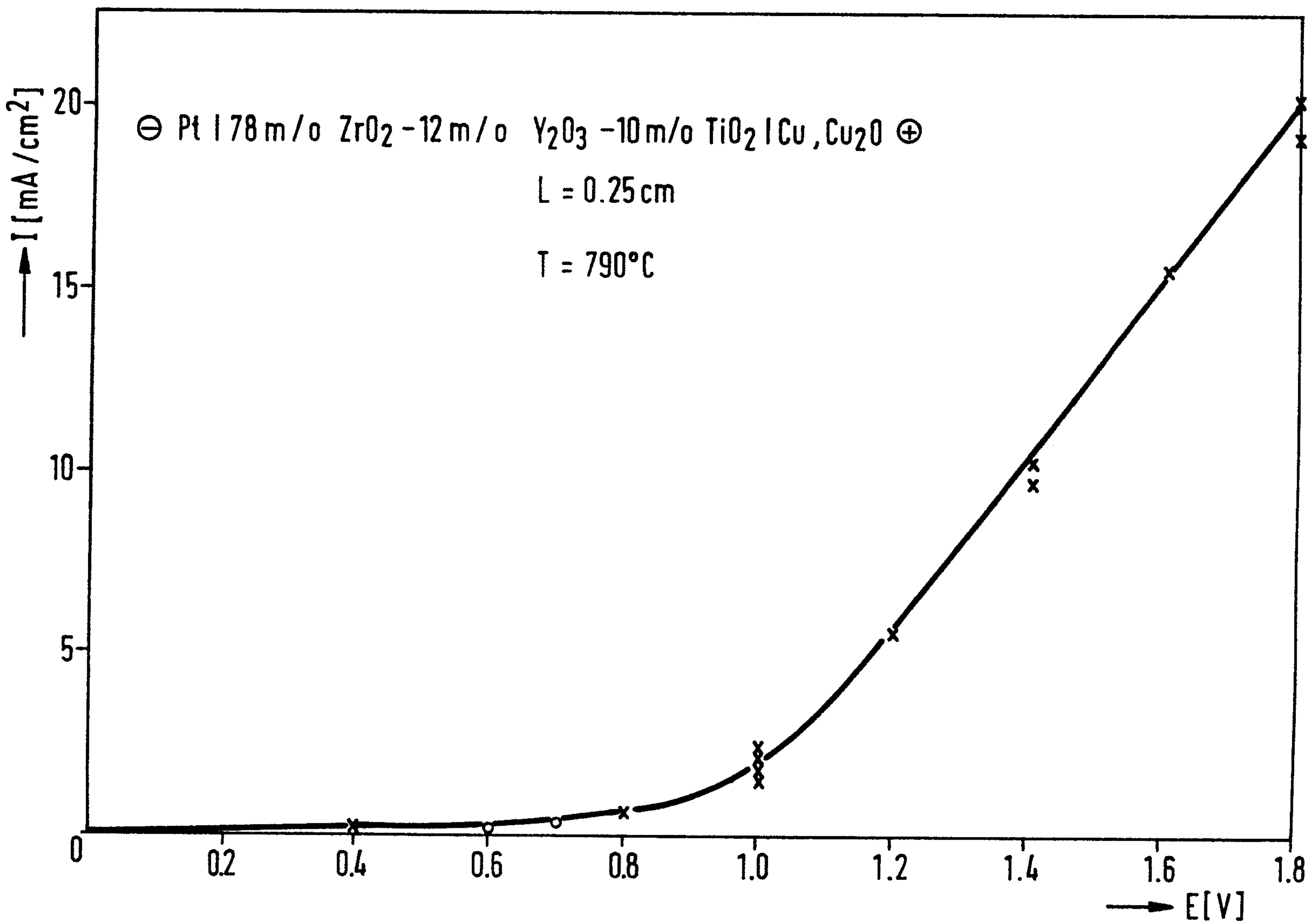
⊖ Pt | 78 m/o $ZrO_2$ -12 m/o $Y_2O_3$ -10 m/o $TiO_2$ | Cu, $Cu_2O$ ⊕
L = 0.25 cm
T = 790°C
I [mA/cm²]
20
15
10
5
0
0.2
0.4
0.6
0.8
1.0
1.2
1.4
1.6
1.8
E[V]

FIG. 5

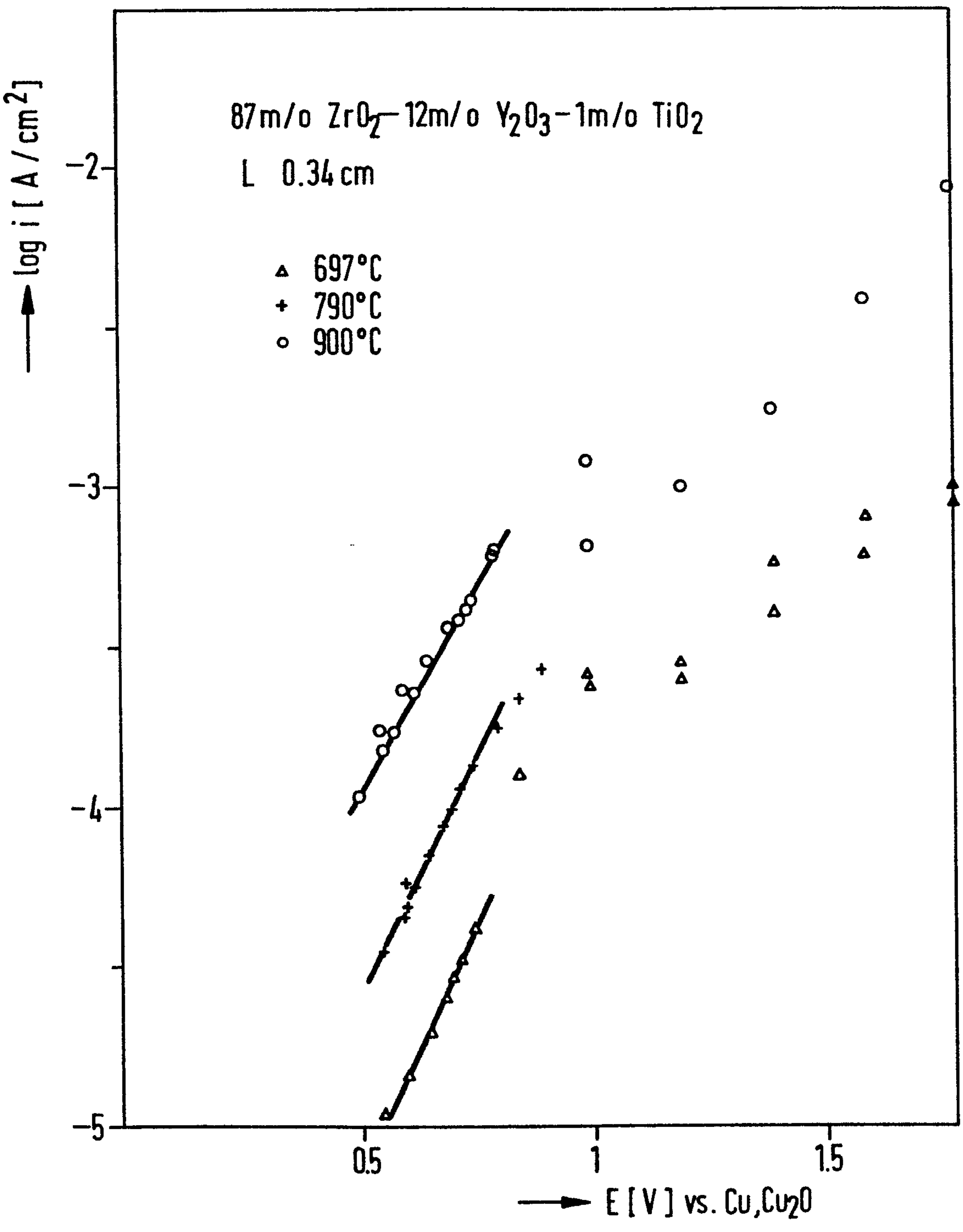
87m/o $ZrO_2$–12m/o $Y_2O_3$–1m/o $TiO_2$
L 0.34 cm
Δ 697°C
+ 790°C
○ 900°C
log i [ A / cm²]
−2
−3
−4
−5
0.5
1
1.5
E [V] vs. Cu,$Cu_2O$

FIG.6

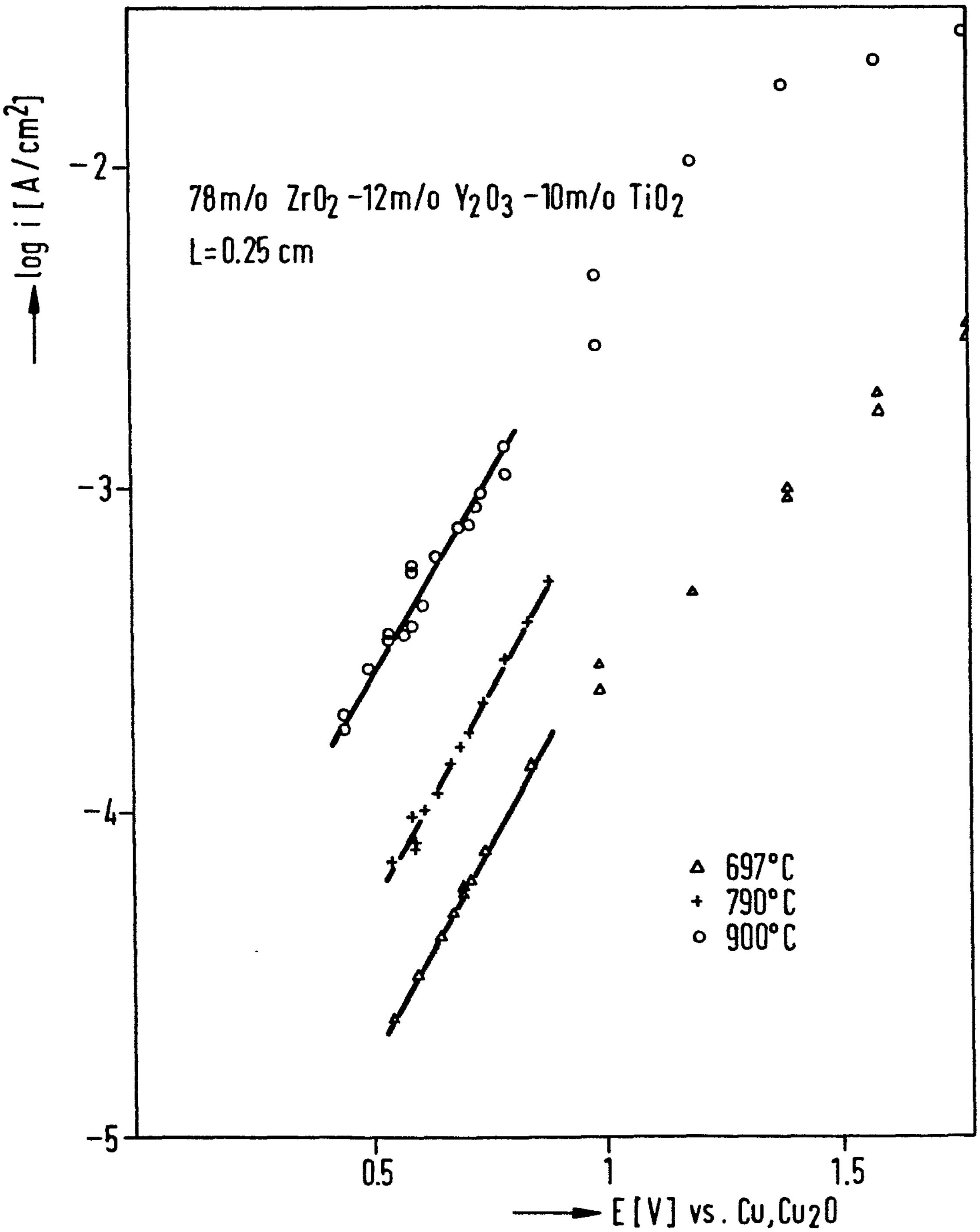
78m/o $ZrO_2$ -12m/o $Y_2O_3$ -10m/o $TiO_2$
L=0.25 cm
log i [A/cm²]
-2
-3
-4
-5
0.5
1
1.5
E [V] vs. Cu,$Cu_2O$
△ 697°C
+ 790°C
○ 900°C

FIG.7

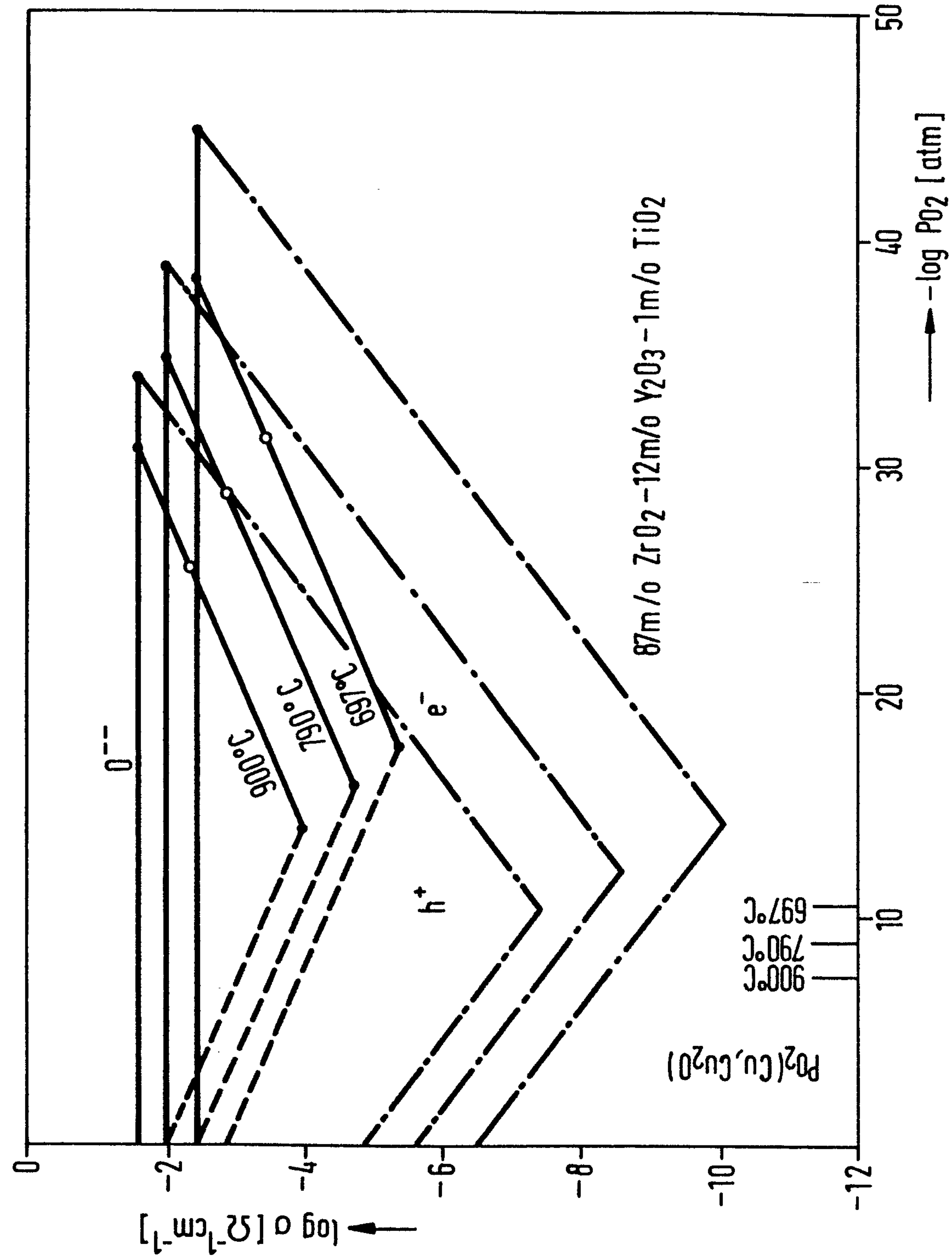
log σ [Ω⁻¹cm⁻¹]
0
-2
-4
-6
-8
-10
-12
-log Po2 [atm]
10
20
30
40
50
87m/o ZrO2-12m/o Y2O3-1m/o TiO2
O--
900°C
790°C
697°C
h+
e-
Po2(Cu,Cu2O)
900°C
790°C
697°C

FIG. 8

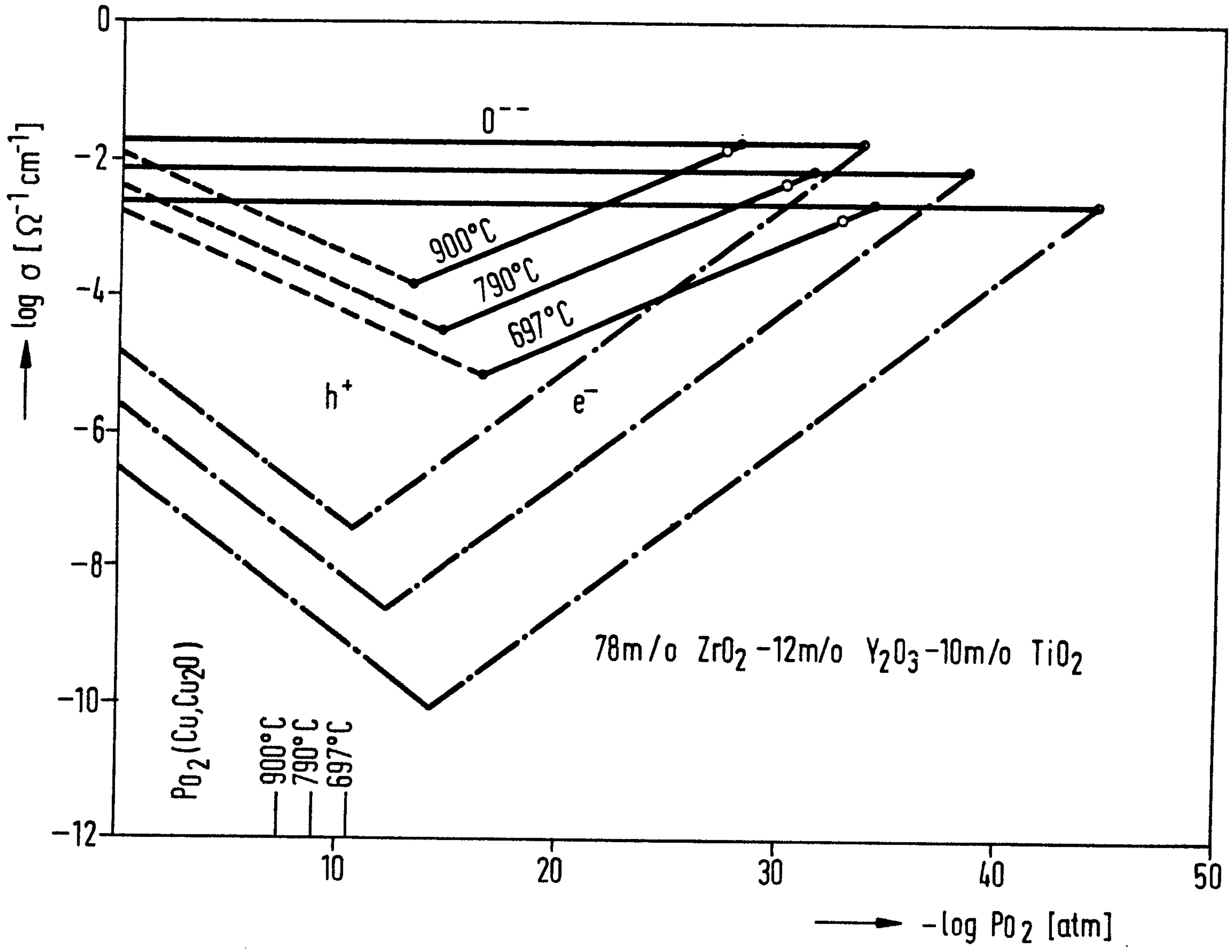
log σ [Ω⁻¹ cm⁻¹]
0
-2
-4
-6
-8
-10
-12
O⁻⁻
900°C
790°C
697°C
h⁺
e⁻
78m/o ZrO2 -12m/o Y2O3 -10m/o TiO2
PO2 (Cu,Cu2O)
900°C
790°C
697°C
10
20
30
40
50
-log PO2 [atm]

FIG.9

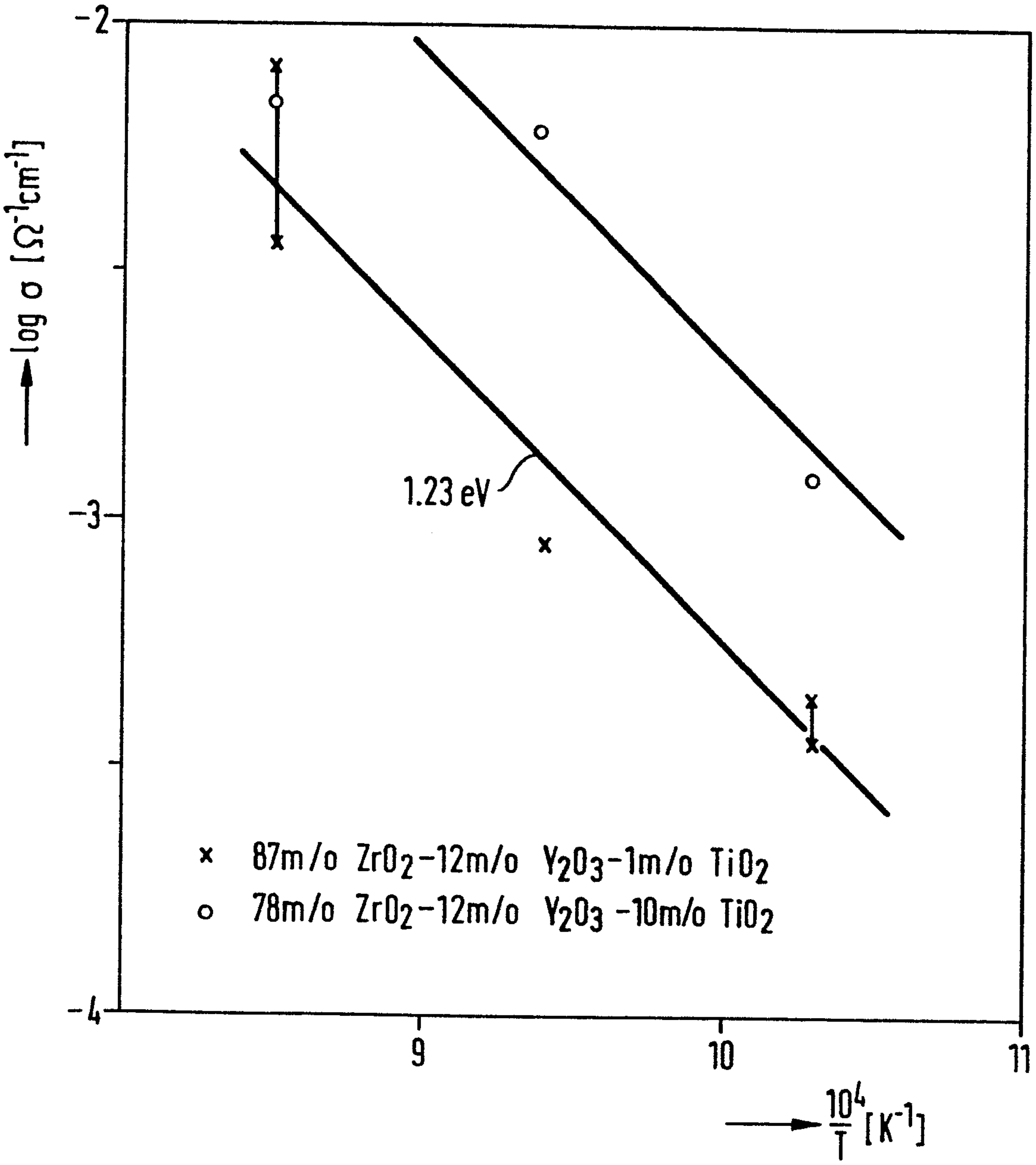

-2
-3
-4
log σ [Ω⁻¹cm⁻¹]
1.23 eV
× 87m/o ZrO2-12m/o Y2O3-1m/o TiO2
o 78m/o ZrO2-12m/o Y2O3 -10m/o TiO2
9
10
11
10⁴/T [K⁻¹]